Europäisches Patentamt

European Patent Office

Office européen des brevets

(19)

(11) Veröffentlichungsnummer: **0 392 434**

**A2**

(12) **EUROPÄISCHE PATENTANMELDUNG**

(21) Anmeldenummer: **90106799.1**

(22) Anmeldetag: **09.04.90**

(51) Int. Cl.⁵: **B01D 21/24, E03F 5/16**

(30) Priorität: **08.04.89 DE 3911548**

(43) Veröffentlichungstag der Anmeldung:
**17.10.90 Patentblatt 90/42**

(84) Benannte Vertragsstaaten:
**AT BE CH DE DK ES FR GB GR IT LI LU NL SE**

(71) Anmelder: **BASIKA ENTWÄSSERUNGEN GMBH**
**Am Westerbusch 63a-65**
**D-5600 Wuppertal 1(DE)**

(72) Erfinder: **Drecker, Rolf**
**Am Westerbusch 61**
**D-5600 Wuppertal 1(DE)**

(74) Vertreter: **Patentanwälte Dr. Solf & Zapf**
**Schlossbleiche 20 Postfach 13 01 13**
**D-5600 Wuppertal 1(DE)**

(54) Verfahren zum Entleeren eines Abscheidebehälters sowie Vorrichtung zum Abscheiden von Sink- und/oder Schwimmstoffen aus Brauchwasser.

(57) Die Erfindung betrifft ein Verfahren zum Entleeren eines Abscheidebehälters nach Abscheiden von Sink- und/oder Schwimmstoffen, insbesondere erhärteten Fetten, aus Brauchwasser sowie einen Abscheidebehälter zum Durchführen dieses Verfahrens. Eine in dem Abscheidebehälter aus dem Wasser nach oben abgeschiedene, insbesonders verfestigte, Schwimmstoffschicht wird zum Entleeren des Behälters mit dem darunter befindlichen Wasser verwirbelt und dann aus dem Behälter abgeführt, insbesondere abgepumpt. Dabei wird die Schwimmstoffschicht mit einer Zerkleinerungseinrichtung mechanisch zerkleinert und mit der gleichen Zerkleinerungseinrichtung mit dem Wasser homogen vermischt.

EP 0 392 434 A2

## Verfahren zum Entleeren eines Abscheidebehälters sowie Vorrichtung zum Abscheiden von Sink- und/oder Schwimmstoffen aus Brauchwasser

Die vorliegende Erfindung betrifft ein Verfahren zum Entleeren eines Abscheidebehälters nach Abscheiden von Sink-und/oder Schwimmstoffen, insbesondere erhärteten Fetten, aus Brauchwasser, wobei eine in dem Abscheidebehälter aus dem Wasser nach oben abgeschiedene, insbesondere verfestigte Schwimmstoffschicht zum Entleeren des Behälters mit dem darunter befindlichen Wasser verwirbelt und dann aus dem Behälter abgeführt, insbesondere abgepumpt wird.

Ferner betrifft die Erfindung auch eine Vorrichtung zum Abscheiden von Sink- und/oder Schwimmstoffen, insbesondere erhärtenden Fetten, aus Brauchwasser, bestehend aus einem Abscheidebehälter mit einer Schwimmstoffkammer, einem Zulauf für das Brauchwasser, einem Überlauf für gereinigtes Wasser und einem Entsorgungsanschluß, insbesondere zur Durchführung des erfindungsgemäßen Verfahrens.

Aus der DE-PS 20 03 565 sind ein derartiges Verfahren und eine Vorrichtung zum Entleeren eines Leichtflüssigkeitsabscheiders, insbesondere eines Fettabscheiders, bekannt. Hierbei soll die im Abscheider abgesonderte Schicht dadurch "aufgerissen und verwirbelt" werden, daß das im Abscheider vorhandene Wasser mittels einer Pumpe in Kreislauf genommen und dem Abscheider über eine Zufuhrleitung wieder zugeführt wird. Dabei mündet die Zufuhrleitung von unten in eine Ecke des Abscheidergehäuses, und zwar mit einigem Abstand unter der Leichtflüssigkeits- bzw. Fettschicht. Das über die Pumpe mit Druck zugeführte Wasser soll so von unten gegen die Schwimmstoffschicht strömen und diese so aufreißen und mit dem Wasser verwirbeln. Allerdings ist hierfür nachteiligeweise eine Pumpe mit einer sehr hohen Leistung von ca. 3 kW erforderlich. Außerdem dauert das "Aufreißen" und das Verwirbeln mit bis zu mehreren Stunden sehr lang, was in Verbindung mit der hohen Anschlußleistung der Pumpe zu einem außerordentlich hohen Energiebedarf führt. Außerdem muß der Entsorgungsvorgang lange vor dem eigentlichen Entsorgen, d.h. dem Abpumpen, vorbereitend eingeleitet werden. Dabei wird jedoch zudem oftmals keine ausreichende Reinigung des Abscheidebehälters erreicht, d.h. es verbleiben Rückstände der Schwimmstoffschicht. Um diese Rückstände möglichst gering zu halten, ist bei einer derartigen Anordnung der Zufuhrleitung die Verwendung einer zusätzlichen Rührvorrichtung unumgänglich, um wenigstens den größten Teil der Leichtflüssigkeits- bzw. Schwimmstoffschicht aufreißen und verwirbeln zu können. Eine zusätzliche Rührvorrichtung stellt jedoch einen Zusatz dar, der weitere Kosten verursacht und außerdem die Wartung kompliziert.

Weiterhin hat es sich herausgestellt, daß in größeren Abscheidern mit feststehenden Düsentellern und Sprüharmen, durch die erforderliche größere Anzahl, eine 3-4 kW Pumpe nur noch eine unzureichende Verwirbelung, Vermischung oder gar Zerkleinerung ermöglicht.

Demzufolge wird in einem Zusatzpatent (DE-PS 25 55 136) zu der oben beschriebenen Patentschrift der Leichtflüssig keitsabscheider derart weitergebildet, daß die Leitung für die Zufuhr der Flüssigkeit in Höhe der Leichtsflüssigkeitsschicht in den Abscheider mündet und ihre Mündung als Düse zur Erzeugung mindestens eines etwa horizontal gerichteten Strahls ausgebildet ist. In einer in dieser Veröffentlichung beschriebenen Weiterbildung ist dabei die Düse horizontal verschiebbar angeordnet. Dadurch sollen bei einem einmaligen Hin- und Rückverschieben der Düse alle Bereiche der abgeschiedenen Leichtstoffschicht erfaßt, aufgerissen und verwirbelt werden. Nachteilig hierbei ist nach wie vor die erforderliche Pumpe mit hoher Leistung sowie aber auch ein hoher konstruktiver Aufwand für die bewegliche Düsenanordnung. Außerdem läßt sich hierbei die Vorbereitungszeit für die eigentliche Entsorgung nur unwesentlich verkürzen.

Darüber hinaus sind weiterhin Systeme bekannt, bei denen die erhärtete Schwimmstoffschicht mittels einer Heizeinrichtung verflüssigt wird (beispielsweise DE-OS 33 30 088). Auch dies bringt jedoch einen hohen Energiebedarf mit sich. Werden beispielsweise elektrische Heizeinrichtungen verwendet, wie es ebenfalls bekannt ist, so besitzen diese eine Leistungsaufnahme von bis zu 10 kW, so daß sich diese Abscheider nicht an solchen Orten verwenden lassen, wo die elektrische Stromversorgung derartige Anschlußwerte nicht zuläßt. Außerdem ist jedenfalls eine zusätzliche Umwälzpumpe erforderlich, die noch einen zusätzlichen Energieverbrauch verursacht. Auch bei Verwendung von Heizeinrichtungen sind die Vorbereitungszeiten für die Entsorgung sehr lang.

Der vorliegenden Erfindung liegt daher die Aufgabe zugrunde, ausgehend von dem eingangs beschriebenen Stand der Technik ein Verfahren zum Entleeren eines Abscheidebehälters anzu geben, durch das eine schnelle, intensive, vollständige Entsorgung der abgesetzten Schwimmstoffe zusammen mit dem Wasser erreicht werden kann. Ferner soll eine Vorrichtung zum Abscheiden von Sink- und/oder Schwimmstoffen geschaffen werden, die bei geringem konstruktiven Aufwand sowie mit geringem Energieverbrauch eine schnelle, intensive, vollständige Entsorgung der Schwimmstoffe ermöglicht.

Erfindungsgemäß wird dies dadurch erreicht, daß die Schwimmstoffschicht mit einer Zerkleinerungseinrichtung mechanisch zerkleinert und mit der gleichen Zerkleinerungseinrichtung mit dem Wasser homogen vermischt wird. Als mechanische Zerkleinerungseinrichtung wird insbesondere mindestens ein innerhalb des Niveaubereichs der Schwimmstoffschicht angeordneter Propeller verwendet. Durch die Erfindung kann in einer außerordentlich kurzen Zeit von nur etwa 5 Minuten die Schwimmstoffschicht mechanisch zerkleinert, dies bedeutet zerschnitten, zerhackt und/oder zerschlagen werden, wodurch gleichzeitig eine intensive Vermischung bzw. Verwirbelung mit dem Wasser erfolgt. Es kann so binnen kürzester Zeit aus den Schwimmstoffen und dem Wasser eine rückstandsfreie, sämig fließende, "schaumige" Emulsion, Suspension und/oder Dispersion hergestellt werden, die nachfolgend mittels einer üblichen Entsorgungspumpe abgepumpt werden kann.

Die erfindungsgemäße Vorrichtung ist dadurch gekennzeichnet, daß innerhalb der Schwimmstoffkammer im Niveaubereich einer sich abscheidenden Schwimmstoffschicht eine aus mindestens einem mittels einer im wesentlichen horizontalen Welle rotierend antreibbaren Propeller bestehende Zerkleinerungseinrichtung angeordnet ist. Diese erfindungsgemäße Zerkleinerungseinrichtung sorgt somit einerseits für eine mechanische Zerkleinerung der Schwimmstoffschicht durch Zerhacken, Zerschlagen und/oder Zerschneiden, und andererseits auch für eine intensive, homogene Vermischung der so zerkleinerten Schwimmstoffe mit dem Wasser.

Durch die Erfindung wird eine äußerst preiswerte Abscheidevorrichtung geschaffen, denn es können vorteilhafterweise eine teure Umwälzpumpe mit den erforderlichen Leitungen, Ventilen usw. und/oder Heizeinrichtungen entfallen. Auch der Energiebedarf reduziert sich erheblich; so reicht zum Antrieb des erfindungsgemäßen Propellers vorteilhafterweise ein Elektromotor mit einer Leistung von nur etwa 0,5 -1,0 kW. Dies stellt im Vergleich zu den bekannten Vorrichtungen eine erhebliche Energieeinsparung dar, zumal ja der Entsorgungsvorgang durch die Erfindung wesentlich kürzer als beim Stand der Technik ist.

Vorteilhafte Ausgestaltungsmerkmale und Weiterbildungen der Erfindung sind in den Unteransprüchen sowie der folgenden Beschreibung enthalten.

Anhand der beiliegenden Zeichnung soll im folgenden die Erfindung beispielhaft näher erläutert werden. Dabei zeigen:

Fig. 1 eine schematische Seitenansicht einer erfindungsgemäßen Abscheidevorrichtung,

Fig. 2 eine schematische Draufsicht der Abscheidevorrichtung in Pfeilrichtung II gemäß Fig. 1 und

Fig. 3 einen vereinfachten Vertikalschnitt längs der Linie III-III in Fig. 1.

Eine erfindungsgemäße Abscheidevorrichtung 2 zum Abscheiden von Sink- und/oder Schwimmstoffen weist einen Abscheide behälter 4 auf. Innerhalb dieses Abscheidebehälters 4 ist eine Schwimmstoffkammer 6 durch eine eingangsseitige, etwa vertikal angeordnete Prallwand 8 und eine ausgangsseitige Tauchwand 10 abgeteilt. Eingangsseitig mündet im oberen Bereich des Abscheidebehälters 4 ein Zulauf 12 in eine zwischen einer Behälterwandung 14 und der Prallwand 8 gebildete Einlaufkammer 16. Ausgangsseitig ist ebenfalls im oberen Bereich des Abscheidebehälters 4 ein Überlauf 18 angeordnet, der aus einer zwischen der Tauchwand 10 und einer Behälterwandung 20 gebildeten Auslaufkammer 22 nach außen führt. Der Überlauf 18 dient zum Anschluß einer nicht dargestellten, zu einem Abwasserkanal führenden Leitung. Im unteren Bereich des Abscheidebehälters 4 mündet in die Schwimmstoffkammer 6 ein Entsorgungsanschluß 24, an den im dargestellten Beispiel eine vorzugsweise als sogenannte Schneidpumpe ausgebildete Entsorgungspumpe 26 angeschlossen ist, die über eine ausgangsseitige Pumpenleitung 28 verfügt, die über eine nicht dargestellte Leitung z.B. mit einem Entsorgungs-Tankwagen verbindbar ist.

Erfindungsgemäß ist nun innerhalb der Schwimmstoffkammer 6 im Niveaubereich einer sich abscheidenden Schwimmstoffschicht 30 eine mechanische Zerkleinerungseinrichtung 36 angeordnet, die aus mindestens einem mittels einer im wesentlichen horizontalen Welle 32 rotierend antreibbaren Propeller 34 besteht. Je nach Größe des Abscheidebehälters 4 bzw. der Schwimmstoffkammer 6 kann die mechanische Zerkleinerungseinrichtung 36 auch aus mehreren, beispielsweise zwei bis vier Propellern 34 bestehen, die dann entsprechend über den Umfang der Schwimmstoffkammer 6 verteilt angeordnet sein sollten.

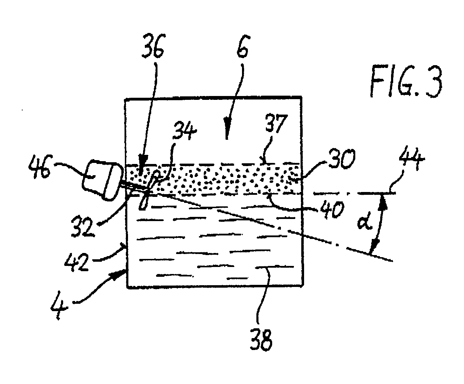

Wesentlich ist nun, daß jeder Propeller 34 derart im Niveaubereich der Schwimmstoffschicht 30 angeordnet ist, daß sein oberer Peripheriebereich, d.h. der obere Umfang eines von den Enden der Propellerflügel beschriebenen, etwa vertikal angeordneten Kreises, stets innerhalb des Niveaubereichs der Schwimmstoffschicht 30, d.h. unterhalb einer oberen Fläche 37 der sich absetzenden Schwimmstoffschicht 30, liegt. Sein unterer Umfangsbereich ist je nach Füllgrad des Abscheidebehälters 4, d.h. je nach "Dicke" der Schwimmstoffschicht 30, entweder ebenfalls innerhalb des Niveaubereichs der Schwimmstoffschicht 30, oder aber noch innerhalb des Niveaubereichs des darunter befindlichen Wassers 38, d.h. unterhalb der Grenzfläche 40 zwischen dem Wasser 38 und der Schwimmstoffschicht 30, angeordnet (siehe hierzu insbesondere Fig. 3).

Die Welle 32 jedes Propellers 34 ist beispielsweise über einen Wellendichtring abgedichtet durch die entsprechende Behälterwandung 42 hindurchgeführt. Dabei erstreckt sich die Welle 32 zusammen mit dem Propeller 34 vorzugsweise geringfügig schräg nach unten geneigt in die Schwimmstoffkammer 6 hinein, wobei die Welle 32 mit der in Fig. 3 eingezeichneten Horizontalen 44 vorzugsweise einen spitzen Winkel $\alpha$ von 5° bis 15°, insbesondere etwa 10°, einschließt.

Jeder Propeller 34 ist erfindungsgemäß über die Welle 32 von einem außerhalb des Abscheidebehälters 4 befestigten Elektromotor 46 antreibbar, und zwar insbesondere mit einer derartigen Drehrichtung, daß er eine in den Abscheidebehälter 4 bzw. in die Schwimmstoffkammer 6 hinein, d.h. vorzugsweise schräg nach unten gerichtete Strömung erzeugt. Dabei kann durch eine geeignete Halterung (nicht erkennbar) der Motor 46 zusammen mit der Welle 32 und dem Propeller 34 derart verstellbar angeordnet sein, daß der Winkel $\alpha$ zwischen der Welle 32 und der Horizontalen 44 veränderbar ist (siehe auch hierzu Fig. 3).

Der Elektromotor 46 besitzt eine Nenndrehzahl von 1.000 bis 2,800 Upm, insbesondere 1.400 Upm. Dabei ist ein Elektromotor 46 mit einer Anschlußleistung von 0,5 bis 1,0 kW, insbesondere 0,7 kW, ausreichend.

Vorzugsweise besitzt jeder Propeller einen Flügeldurchmesser von etwa 200 mm. Dabei weist jeder Propeller 34 zwei bis vier, insbesondere zwei, Propellerflügel auf. Jeder Propellerflügel weist dabei jeweils eine Steigung von 10° bis 20° gegenüber der Rotationsebene auf.

In einer in Fig. 2 angedeuteten, vorteilhaften Weiterbildung der Erfindung weist der Abscheidebehälter 4 in Eckbereichen 48 der Schwimmstoffkammer 6 konkav abgerundete, z.B. von Leitblechen Gebildete Leitflächen 50 auf (in Fig. 2 gestrichelt dargestellt).

In dem dargestellten Ausführungsbeispiel der Erfindung ist dem Abscheidebehälter 4 ein Schlammfangbehälter 52 zum Abscheiden von Sinkstoffen vorgeordnet. Der Schlammfangbehälter 52 ist mit dem Abscheidebehälter 4 über den Zulauf 12 sowie im unteren Bereich über eine weitere, absperrbare Verbindungsleitung 54 verbunden. In seinem dem Zulauf 12 gegenüberliegenden Bereich weist der Schlammfangbehälter 52 einen Zulauf 56 für verschmutztes, Sink- und/oder Schwimmstoffe enthaltendes Brauchwasser auf.

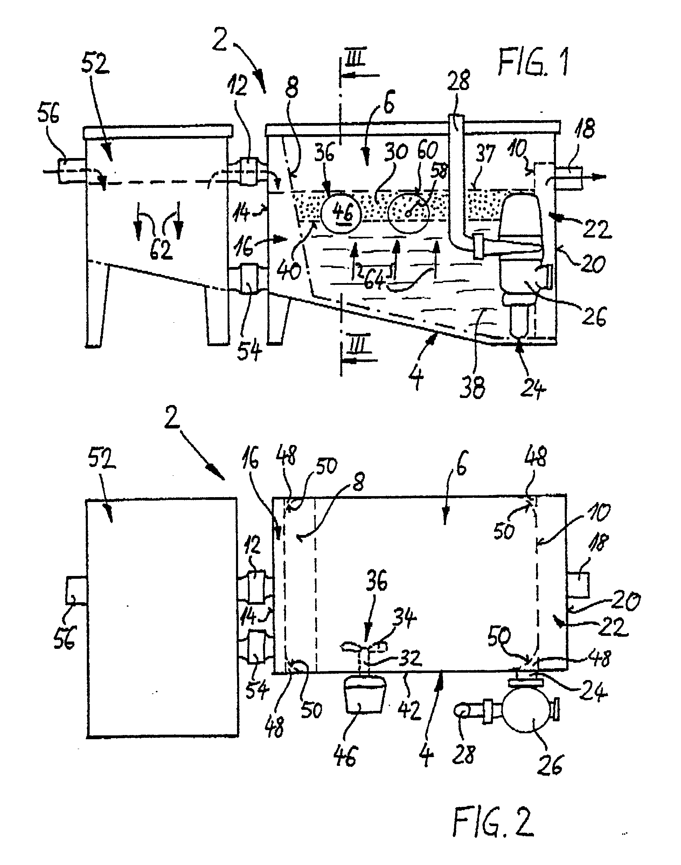

Weiterhin ist es vorteilhaft, wenn der Abscheidebehälter 4 im Niveaubereich der Schwimmstoffschicht 30 ein vorzugsweise mit einem innenseitigen Wischer 58 ausgestattetes Sichtfenster 60 aufweist (nur in Fig. 1 zu erkennen).

Ferner kann zusätzlich zu der erfindungsgemäßen, mechanischen Zerkleinerungseinrichtung 36 innerhalb des Abscheide behälters 4, und zwar insbesondere unmittelbar unter dem Niveaubereich der Schwimmstoffschicht 30, mindestens eine nicht dargestellte Heizeinrichtung angeordnet sein.

Im folgenden sollen nun die Funktion der erfindungsgemäßen Abscheidevorrichtung 2 sowie das erfindungsgemäße Verfahren zum Entleeren des Abscheidebehälters 4 näher erläutert werden.

Verschmutztes Brauchwasser - beispielsweise aus Großküchen -gelangt vorzugsweise zunächst über den Zulauf 56 in den Schlammfangbehälter 52. In diesem Schlammfangbehälter 52 erfolgt ein Abscheiden von Sinkstoffen, die schwerer als Wasser sind, in Richtung der in Fig. 1 eingezeichneten Pfeile 62 nach unten. Das so vorgereinigte, von Sinkstoffen befreite Wasser gelangt über den als Überlauf dienenden Zulauf 12 in die Einlaufkammer 16 des Abscheidebehälters 4 und wird durch die Prallwand 8 nach unten gelenkt. In der Schwimmstoffkammer 6 erfolgt eine Beruhigung des einlaufenden Wassers derart, daß enthaltene Schwimmstoffe, die spezifisch leichter als das Wasser sind, in Richtung der in Fig. 1 eingezeichneten Pfeile 64 sich nach oben absetzen können. Üblicherweise enthält das Brauchwasser erhärtende Fette, so daß die sich absetzende Schwimmstoffschicht 30 sich nachfolgend erhärtet. Das so gereinigte Wasser gelangt über die Auslaufkammer 22 und den Überlauf 18 zu einem nicht dargestellten Abwasserkanal.

Durch das Sichtfenster 60 hindurch kann nun festgestellt werden, wann die Schwimmstoffschicht 30 derart dick geworden ist, daß eine Entsorgung erforderlich ist. Unmittelbar vor der Entsorgung wird nun erfindungsgemäß der bzw. jeder Propeller 34 der erfindungsgemäßen Zerkleinerungsvorrichtung 36 über den Motor 46 und die Welle 32 in Rotation versetzt.

Der bzw. jeder Propeller 34 zerschneidet, zerhackt und/oder zerschlägt die erhärtete Schwimmstoffschicht 30 mechanisch. Gleichzeitig vermischt der Propeller 34 die erfindungsgemäß immer kleiner werdenden Schwimmstoffteile intensiv mit dem Wasser 38. Hierdurch entsteht in kürzester Zeit eine sämig fließfähige, pumpfähige Flüssigkeit bzw. Masse (Emulsion, Suspension und/oder Dispersion). Diese Flüssigkeit kann dann ohne weiteres mittels der Entsorgungspumpe 26 aus dem Abscheidebehälter 4 abgeführt und beispielsweise einem Tankwagen zur Entsorgung zugeführt werden.

Für die Verwirbelung der Schwimmstoffe mit dem Wasser sind die erfindungsgemäß vorgesehenen Leitflächen 50 insofern vorteilhaft, als diese eine gute Führung und Umwälzung des gesamten Behälterinhaltes bewirken.

Ist auch eine Entleerung des Schlammfangbehälters 52 erforderlich, wird vor der Entsorgung die Verbindungsleitung 54 geöffnet, wodurch die in dem Schlammfangbehälter 52 gesammelten Sinkstoffe ebenfalls in den Abscheidebehälter 4 gespült werden und dort durch die erfindungsgemäße Zerkleinerungseinrichtung 36 ebenfalls mit dem Inhalt des Abscheidebehälters 4 vermischt und über die Entsorgungspumpe 26 entsorgt werden können.

Es hat sich überraschenderweise gezeigt, daß die nach dem erfindungsgemäßen Verfahren bzw. mit der erfindungsgemäßen Zerkleinerungseinrichtung 36 verflüssigten Schwimmstoffe bzw. das sich ergebende Schwimmstoff/Wasser-Gemisch derart intensiv vermischt ist, daß es über mehrere Tage hinweg flüssig, d.h. pumpfähig bleibt. Das Gemisch weist dabei etwa die Konsistenz von Buttermilch oder Dickmilch auf. Das Gemisch ist vorteilhafterweise absolut frei von Fettklumpen, so daß Verstopfungen der Entsorgungspumpe ausgeschlossen sind.

**Ansprüche**

1. Verfahren zum Entleeren eines Abscheidebehälters nach Abscheiden von Sink- und/oder Schwimmstoffen, insbesondere erhärteten Fetten, aus Brauchwasser, wobei eine in dem Abscheidebehälter aus dem Wasser nach oben abgeschiedene, insbesonders verfestigte, Schwimmstoffschicht zum Entleeren des Behälters mit dem darunter befindlichen Wasser verwirbelt und dann aus dem Behälter abgeführt, insbesondere abgepumpt wird, **dadurch gekennzeichnet,** daß die Schwimmstoffschicht mit einer Zerkleinerungseinrichtung mechanisch zerkleinert und mit der gleichen Zerkleinerungseinrichtung mit dem Wasser homogen vermischt wird.

2. Verfahren nach Anspruch 1, **dadurch gekennzeichnet,** daß aus den mechanisch zerkleinerten Schwimmstoffen und dem Wasser eine fließfähige Emulsion und/oder Suspension und/oder Dispersion hergestellt wird.

3. Vorrichtung zum Abscheiden von Sink- und/oder Schwimmstoffen, insbesondere erhärtenden Fetten, aus Brauchwasser, bestehend aus einem Abscheidebehälter mit einer Schwimmstoffkammer, einem Zulauf für das Brauchwasser, einem Überlauf für gereinigtes Wasser und einem Entsorgungsanschluß, insbesondere zur Durchführung des Verfahrens nach Anspruch 1 oder 2, **dadurch gekennzeichnet,** daß innerhalb der Schwimmstoffkammer (6) im Niveaubereich einer sich abscheidenden Schwimmstoffschicht (30) eine aus mindestens einem mittels einer im wesentlichen horizontalen Welle (32) rotierend antreibbaren Propeller (34) bestehende, mechanische Zerkleinerungseinrichtung (36) angeordnet ist.

4. Vorrichtung nach Anspruch 3, **dadurch gekennzeichnet,** daß der bzw. jeder Propeller (34) derart im Niveaubereich der Schwimmstoffschicht (30) angeordnet ist, daß sein oberer Peripheriebereich stets innerhalb des Niveaubereichs der Schwimmstoffschicht (30) und sein unterer Peripheriebereich innerhalb des Niveaubereichs der Schwimmstoffschicht (30) oder innerhalb des Niveaubereichs des darunter befindlichen Wassers (38) angeordnet sind.

5. Vorrichtung nach Anspruch 3 oder 4, **dadurch gekennzeichnet,** daß die abgedichtet durch eine Behälterwandung (42) geführte Welle (32) des bzw. jedes Propellers (34) sich mit dem Propeller (34) geringfügig schräg nach unten geneigt in den Abscheidebehälter (4) erstreckt, wobei die Welle (32) mit der Horizontalen (44) vorzugsweise einen spitzen Winkel ($\alpha$) von 5° bis 15° einschließt.

6. Vorrichtung nach einem oder mehreren der Ansprüche 3 bis 5, **dadurch gekennzeichnet,** daß der bzw. jeder Propeller (34) über die Welle (32) von einem außerhalb des Abscheidebehälters (4) angeordneten Elektromotor (46) antreibbar ist, der vorzugsweise eine Nenn-Drehzahl von 1.000 bis 2.800 Upm, insbesondere 1.400 Upm, sowie vorzugsweise eine Anschlußleistung von 0,5 bis 1,0 kW, insbesondere 0,7 kW, aufweist.

7. Vorrichtung nach einem oder mehreren der Ansprüche 3 bis 6, **dadurch gekennzeichnet,** daß der bzw. jeder Propeller (34) einen Flügeldurchmesser von vorzugsweise 200 mm aufweist.

8. Vorrichtung nach einem oder mehreren der Ansprüche 3 bis 7, **dadurch gekennzeichnet,** daß der bzw. jeder Propeller (34) zwei bis vier, insbesondere zwei Propellerflügel aufweist.

9. Vorrichtung nach Anspruch 8, **dadurch gekennzeichnet,** daß die Propellerflügel jeweils eine Steigung von 10° bis 20° aufweisen.

10. Vorrichtung nach einem oder mehreren der Ansprüche 3 bis 5, **dadurch gekennzeichnet,** daß der Abscheidebehälter (4) in Eckbereichen (48) der Schwimmstoffkammer (6) konkav abgerundete Leitflächen (50) aufweist.

11. Vorrichtung nach einem oder mehreren der Ansprüche 3 bis 10, **dadurch gekennzeichnet,** daß dem Abscheidebehälter (4) ein über den Zulauf (12) angeschlossener Schlammfangbehälter (52) zum Abscheiden von Sinkstoffen vorgeordnet ist.

12. Vorrichtung nach Anspruch 11,
dadurch gekennzeichnet, daß der Abscheidebehälter (4) und der Schlammfangbehälter (52) in ihren unteren Bereichen über eine absperrbare Verbindungsleitung (54) miteinander verbunden sind.

13. Vorrichtung nach einem oder mehreren der Ansprüche 3 bis 12,
dadurch gekennzeichnet, daß an dem Entsorgungsanschluß (24) des Abscheidebehälters (4) eine Entsorgungspumpe (26) angeschlossen ist.

14. Vorrichtung nach einem oder mehreren der Ansprüche 3 bis 13,
dadurch gekennzeichnet, daß der Abscheidebehälter (4) im unteren Niveaubereich der Schwimmstoffschicht (30) ein vorzugsweise mit einem innenseitigen Wischer (58) ausgestattetes Sichtfenster (60) aufweist.

15. Vorrichtung nach einem oder mehreren der Ansprüche 3 bis 14,
dadurch gekennzeichnet, daß innerhalb des Abscheidebehälters (4), insbesondere im Niveaubereich unter der Schwimmstoffschicht (30), mindestens eine Heizeinrichtung angeordnet ist.

FIG. 1

FIG. 2

FIG.3